# EUROPEAN PATENT SPECIFICATION

(11) **EP 4 292 259 B1**
(45) Date of publication and mention of the grant of the patent: **22.04.2026**
(21) Application number: 22704960.8
(22) Date of filing: 08.02.2022
(51) Int. Cl.: H04L 45/302, H04W 8/20, H04W 12/041, H04W 60/04

(54) **NETWORK SECURITY BASED ON ROUTING INFORMATION**
NETZWERKSICHERHEIT AUF DER BASIS VON ROUTINGINFORMATIONEN
SÉCURITÉ DE RÉSEAU REPOSANT SUR DES INFORMATIONS DE ROUTAGE

(30) Priority: 11.02.2021 US 202163148540 P
(43) Date of publication of application: 20.12.2023
(73) Proprietor: Lenovo (Singapore) Pte. Ltd., New Tech Park 556741 (SG)
(72) Inventor: BASKARAN, Sheeba Backia Mary, 61381 Friedrichsdorf (DE); VELEV, Genadi, 64291 Darmstadt (DE); KUNZ, Andreas, 68526 Ladenburg (DE)
(74) Representative: Openshaw & Co.
(86) International application number: PCT/IB2022/051134
(87) International publication number: WO 2022/172160

(56) References cited:
- "3rd Generation Partnership Project; Technical Specification Group Services and System Aspects; Study on the security of Access and Mobility Management Function (AMF) re-allocation; (Release 17)", vol. SA WG3, no. V0.3.0, 1 February 2021 (2021-02-01), pages 1 - 38, XP051999426, Retrieved from the Internet <URL:https://ftp.3gpp.org/Specs/archive/33_series/33.864/33864-030.zip S3-210620/S3-210620_TR33864-030-cl.docx> [retrieved on 20210201]
- "3rd Generation Partnership Project; Technical Specification Group Services and System Aspects; Procedures for the 5G System (5GS); Stage 2 (Release 15)", 25 May 2020 (2020-05-25), XP051907008, Retrieved from the Internet <URL:https://ftp.3gpp.org/tsg_sa/WG2_Arch/Latest_SA2_Specs/DRAFT_INTERIM/Archive/INTERIM_DRAFT_23502-f90+_CRs_Implemented.zip INTERIM_DRAFT_23502-f90+_CRs_Implemented.docx> [retrieved on 20200525]
- LENOVO ET AL: "Update to Solution #4", vol. SA WG3, no. e-meeting; 20211108 - 20211119, 12 November 2021 (2021-11-12), XP052082492, Retrieved from the Internet <URL:https://ftp.3gpp.org/tsg_sa/WG3_Security/TSGS3_105e/Docs/S3-214339.zip S3-214339_was S3-214119_Update to Solution#4.doc> [retrieved on 20211112]
- LENOVO ET AL: "Solution to enable Reallocated AMF to serve the UE", vol. SA WG3, no. e-meeting; 20210301 - 20210305, 22 February 2021 (2021-02-22), XP051980509, Retrieved from the Internet <URL:https://ftp.3gpp.org/tsg_sa/WG3_Security/SGS3_102Bis-e/Docs/S3-211121.zip S3-211121_Solution to enable Reallocated AMF to serve the UE.doc> [retrieved on 20210222]

## Description

### CROSS-REFERENCE TO RELATED APPLICATIONS

This application claims priority to United States Patent Application Serial Number 63/148,540 entitled "APPARATUSES, METHODS, AND SYSTEMS FOR SUPPORTING AUSF SELECTION AND FACILITATING SECURITY CONTEXT PROVISIONING FOR A RE-ALLOCATED AMF" and filed on February 11, 2021 for Sheeba Backia Mary Baskaran.

### FIELD

The subject matter disclosed herein relates generally to wireless communications and more particularly relates to network security based on routing information.

### BACKGROUND

In certain wireless communications networks, a new access and mobility management function may be used. In such networks, the new access and mobility management function may not have authentication server function selection information.

"3rd Generation Partnership Project; Technical Specification Group Services and System Aspects; Study on the security of Access and Mobility Management Function (AMF) re-allocation; (Release 17)", vol. SA WG3, no. V0.3.0, 1 February 2021 (2021-02-01), pages 1 - 38, discloses that the 5G System supports a registration procedure with AMF re-allocation. As described in TS 23.502, this procedure is used when the initial AMF is unable to serve the UE. In which case, the NAS message received from the UE is rerouted to another target AMF either directly over the AMF-to-AMF interface i.e. N14, or via RAN. In this document only the indirect reroute via RAN is considered and specifically aims at addressing the case for the indirect reroute procedure for UE registration.

### BRIEF SUMMARY

The invention is defined by the appended independent claims.

Methods for network security based on routing information are disclosed. Apparatuses and systems also perform the functions of the methods. One embodiment of a method includes receiving, at a first network device, a security request message from an initial access and mobility management function (AMF), an initial security anchor function (SEAF)), or a combination thereof. The security request message includes information indicating a serving network name (SNN), whether routing information is required, a subscription permanent identifier (SUPI), or some combination thereof. In some embodiments, the method includes determining, at the first network device, routing information based on the security request message. In certain embodiments, the method includes transmitting, from the first network device, a security response message to the initial AMF, the initial SEAF, or the combination thereof. The security response message includes the routing information.

One apparatus for network security based on routing information includes a first network device. In some embodiments, the apparatus includes a receiver that receives a security request message from an initial access and mobility management function (AMF), an initial security anchor function (SEAF)), or a combination thereof. The security request message includes information indicating a serving network name (SNN), whether routing information is required, a subscription permanent identifier (SUPI), or some combination thereof. In various embodiments, the apparatus includes a processor that determines routing information based on the security request message. In certain embodiments, the apparatus includes a transmitter that transmits a security response message to the initial AMF, the initial SEAF, or the combination thereof. The security response message includes the routing information.

Another embodiment of a method for network security based on routing information includes receiving, at a second network device, a rerouted non-access stratum (NAS) message from a radio access network (RAN). The rerouted NAS message includes routing information. In some embodiments, the method includes determining a first network device for transmission of a key request message based on the rerouted NAS message. In certain embodiments, the method includes transmitting the key request message to the first network device.

Another apparatus for network security based on routing information includes a second network device. In some embodiments, the apparatus includes a receiver that receives a rerouted non-access stratum (NAS) message from a radio access network (RAN). The rerouted NAS message includes routing information. In various embodiments, the apparatus includes a processor that determines a first network device for transmission of a key request message based on the rerouted NAS message. In certain embodiments, the apparatus includes a transmitter that transmits the key request message to the first network device.

A further embodiment of a method for network security based on routing information includes, in response to determining to reroute a non-access stratum (NAS) message, transmitting, from a third network device, a rerouted NAS message to a radio access network (RAN). The rerouted NAS message includes routing information.

A further apparatus for network security based on routing information includes a third network device. In some embodiments, the apparatus includes a transmitter that, in response to determining to reroute a non-access stratum (NAS) message, transmits a rerouted NAS message to a radio access network (RAN). The rerouted NAS message includes routing information.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for network security based on routing information;
Figure 2 is a schematic block diagram illustrating one embodiment of an apparatus that may be used for network security based on routing information;
Figure 3 is a schematic block diagram illustrating one embodiment of an apparatus that may be used for network security based on routing information;
Figure 4 is a schematic block diagram illustrating one embodiment of a system for providing an AUSF, UDM, and/or any 3GPP NF routing information for AMF reallocation with an NAS reroute via a RAN using the AUSF;
Figures 5A and 5B are schematic block diagrams illustrating one embodiment of a system for AMF slice serving capability based security handling during primary authentication;
Figures 6A and 6B are schematic block diagrams illustrating one embodiment of a system for AMF serving capability based security handling during primary authentication;
Figure 7 is a flow chart diagram illustrating one embodiment of a method for network security based on routing information;
Figure 8 is a flow chart diagram illustrating another embodiment of a method for network security based on routing information; and
Figure 9 is a flow chart diagram illustrating a further embodiment of a method for network security based on routing information.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

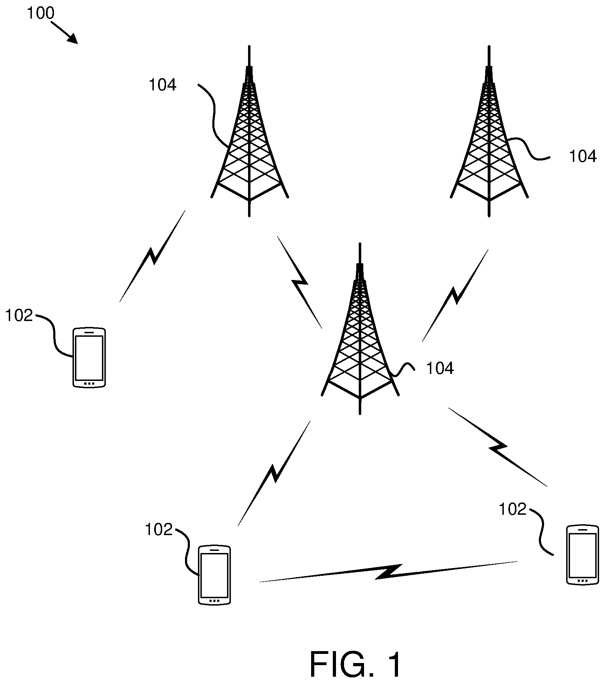

Figure 1 depicts an embodiment of a wireless communication system 100 for network security based on routing information. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In certain embodiments, a network unit 104 may receive, at a first network device, a security request message from an initial access and mobility management function (AMF), an initial security anchor function (SEAF)), or a combination thereof. The security request message includes information indicating a serving network name (SNN), whether routing information is required, a subscription permanent identifier (SUPI), or some combination thereof. In some embodiments, the network unit 104 may determine, at the first network device, routing information based on the security request message. In certain embodiments, the network unit 104 may transmit, from the first network device, a security response message to the initial AMF, the initial SEAF, or the combination thereof. The security response message includes the routing information. Accordingly, the network unit 104 may be used for network security based on routing information.

In some embodiments, a network unit 104 may receive, at a second network device, a rerouted non-access stratum (NAS) message from a radio access network (RAN). The rerouted NAS message includes routing information. In some embodiments, the network unit 104 may determine a first network device for transmission of a key request message based on the rerouted NAS message. In certain embodiments, the network unit 104 may transmit the key request message to the first network device. Accordingly, the network unit 104 may be used for network security based on routing information.

In various embodiments, a network unit 104 may, in response to determining to reroute a non-access stratum (NAS) message, transmit, from a third network device, a rerouted NAS message to a radio access network (RAN). The rerouted NAS message includes routing information. Accordingly, the network unit 104 may be used for network security based on routing information.

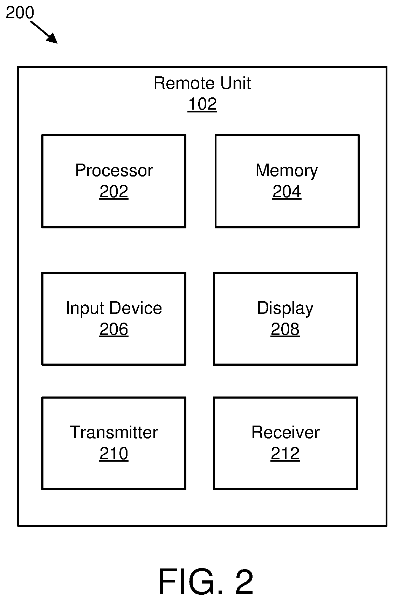

Figure 2 depicts one embodiment of an apparatus 200 that may be used for network security based on routing information. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

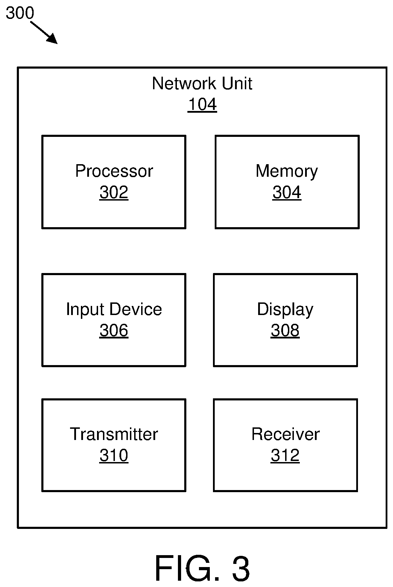

Figure 3 depicts one embodiment of an apparatus 300 that may be used for network security based on routing information. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In certain embodiments, the receiver 312 receives a security request message from an initial access and mobility management function (AMF), an initial security anchor function (SEAF)), or a combination thereof. The security request message includes information indicating a serving network name (SNN), whether routing information is required, a subscription permanent identifier (SUPI), or some combination thereof. In various embodiments, the processor 302 determines routing information based on the security request message. In certain embodiments, the transmitter 310 transmits a security response message to the initial AMF, the initial SEAF, or the combination thereof. The security response message includes the routing information.

In some embodiments, the receiver 312 receives a rerouted non-access stratum (NAS) message from a radio access network (RAN). The rerouted NAS message includes routing information. In various embodiments, the processor 302 determines a first network device for transmission of a key request message based on the rerouted NAS message. In certain embodiments, the transmitter 310 transmits the key request message to the first network device.

In certain embodiments, the transmitter 310, in response to determining to reroute a non-access stratum (NAS) message, transmits a rerouted NAS message to a radio access network (RAN). The rerouted NAS message includes routing information.

In certain embodiments, a reallocated new access and mobility management function ("AMF") receiving an indirect reroute non-access stratum ("NAS") message (e.g., a registration request with fifth generation ("5G") globally unique temporary user equipment ("UE") identity ("GUTI") ("5G-GUTI")) may not have any authentication server function ("AUSF") selection information to allow the new AMF to contact and fetch the UE security context from the right AUSF and/or unified data management ("UDM") instance and this may lead to registration failure.

In some embodiments, indirect AMF reallocation and rerouting via a radio access network ("RAN") procedure enables an NAS security to be established between a UE and an initial AMF which is not capable to serve a UE and may lead to registration failure.

In various embodiments, during a UE registration procedure, if an initial AMF, after primary authentication and UE security context set-up, determines that it is not capable of serving a UE based on local policies and subscription, the initial AMF may indirectly reroute the UE registration request (e.g., a NAS message) to another target AMF via a RAN. The rerouted NAS message does not contain any AUSF routing information. For this indirect reallocation via RAN, the target may not be able to contact the right AUSF which holds the UE security context, which may lead to registration failure.

In certain embodiments, there exists no AUSF and/or UDM routing information transfer between two AMFs via RAN to support an indirect AMF reroute via RAN.

In some embodiments, if an initial AMF, based on local policy and subscription information, decides to forward an NAS message to a target AMF via a RAN, unless the target AMFs are returned from a network slice selection function ("NSSF") and identified by a list of candidate AMFs, the initial AMF sends a reroute NAS message to the RAN. The reroute NAS message includes the information about the target AMF and the full registration request message. If the initial AMF has obtained certain information, that information is included. The RAN sends an initial UE message to the target AMF indicating reroute due to slicing including the information that the NSSF provided.

In various embodiments, indirect AMF reallocation and rerouting via a RAN scenario may include: 1) AUSF and UDM selection, identification, and/or routing for a new target AMF (e.g., a reallocated AMF); and/or 2) AUSF based UE Security context provisioning for the reallocated target AMF to facilitate NAS security establishment between the UE and the target AMF.

In certain embodiments, an initial AMF and new target AMF may not have any direct N14 interface between them due to strict vertical slice isolation requirements. During UE registration, if the initial AMF determines that it is not capable of serving a UE and if it determines to reroute via RAN (e.g., indirect NAS and/or AMF reroute), then an initial AMF and/or security anchor function ("SEAF") may be allowed not to fetch the UE security context from the AUSF or allows the initial AMF and/or SEAF not to use the UE security context fetched from AUSF and does not establish NAS security with the UE to prevent registration failure. Further, the initial AMF reroutes the initial NAS message with a transmission to the target AMF (e.g., via a RAN) along with new routing information, to allow the target AMF to fetch the corresponding UE security context from the AUSF.

In some embodiments, there may be a method to send AUSF and UDM related routing information from an initial AMF to a target AMF via a RAN to facilitate a reallocated target AMF to fetch UE related security context and subscription information from the AUSF and UDM respectively.

In various embodiments, an initial AMF may fetch routing information related to AUSF and UDM selection from an old AMF, from an AUSF and/or UDM, or from its locally stored UE context information.

In a first embodiment, there may be a method to provide AUSF and UDM routing information to a target AMF during AMF reallocation and indirect NAS rerouting (e.g., via RAN) based on information available in the initial AMF, old AMF, and/or AUSF. Specifically, the first embodiment describes how an initial AMF can provide routing information (e.g., via RAN) with a transmission to a reallocated target AMF to enable right AUSF and UDM selection corresponding to a rerouted initial NAS message and/or full registration request message.

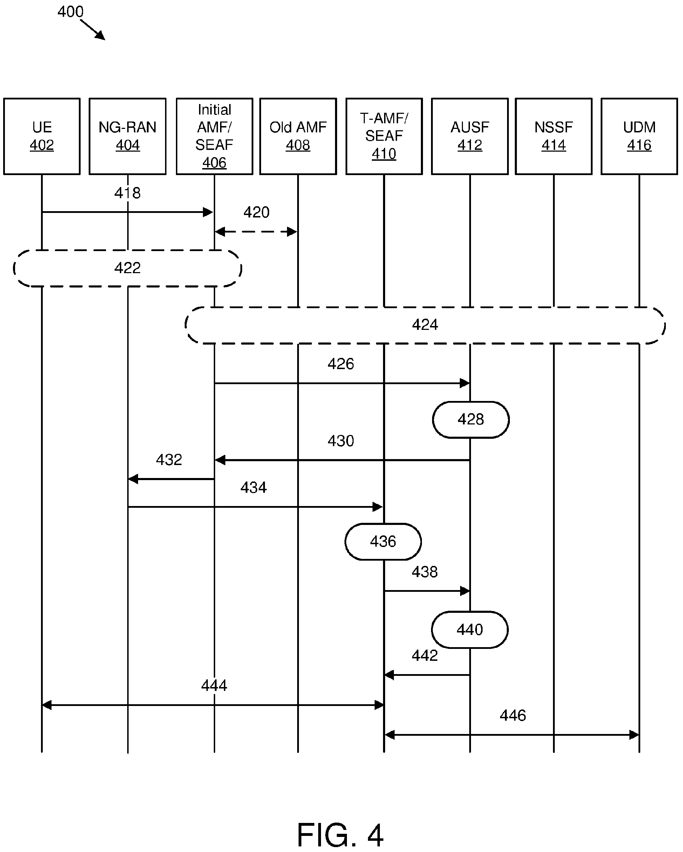

Figure 4 is a schematic block diagram illustrating one embodiment of a system 400 for providing an AUSF, UDM, and/or any 3GPP network function ("NF") routing information for AMF reallocation with an NAS reroute via a RAN using the AUSF. The system 400 includes a UE 402, a next generation ("NG") RAN ("NG-RAN") 404, an initial AMF and/or SEAF ("AMF/SEAF") 406, an old AMF 408, a target ("T") AMF and/or SEAF ("T-AMF/SEAF") 410, an AUSF 412, an NSSF 414, and a UDM 416. Each of the communications described may include one or more messages.

In certain embodiments, the routing information described in Figure 4 may be constructed using and/or may contain any one or more of the following: 1) AUSF instance identifier ("ID"); 2) UDM instance ID; 3) AUSF group ID; 4) UDM group ID; 5) AUSF identification information, internet protocol ("IP") address, and/or fully qualified domain name ("FQDN"); 6) UDM identification information, IP address, and/or FQDN; 7) a routing indicator; and/or 8) UE and/or subscription permanent identifier ("SUPI") group ID.

In some embodiments, the routing information of Figure 4 may be called AUSF routing information, UDM routing information, network routing information, and/or reallocation related routing information ("Realloc-Routing Information"). In various embodiments, a serving network name may be referred as "SNN" or "SN-Name".

In a first communication 418, the UE sends an initial NAS message with a registration request to the initial AMF/SEAF 406.

In a second communication 420 and in a third communication 422, if the registration request is of initial registration (e.g., the second communication 420 does not occur), then the initial AMF/SAEF 406 performs primary authentication with the UE 402. After successful primary authentication (e.g., after a successful expected response verification at the AUSF 412), the AUSF 412 may store the SUPI and/or Kausf (e.g., Kseaf along with a corresponding serving network name). NAS security between the UE 402 and the initial AMF/SAEF 406 may or may not have been setup.

In various embodiments, there may be adaptations for a registration mobility update procedure. If the registration request of the first communication 418 contains 5G-GUTI, the initial AMF/SAEF 406 fetches SUPI and a security context (e.g., UE context) from the old AMF 408 by providing the 5G-GUTI and the registration request. If the initial AMF/SAEF 406 determines to perform a RAN reroute due to indirect AMF reallocation, performs steps 424 through 446, and decides to fetch AUSF routing information from the AUSF 412. In certain embodiments, the initial AMF/SAEF 406 may provide the T-AMF/SAEF 410 with AUSF routing information (e.g., fetched from the old AMF 408) along with a reroute NAS message.

In a fourth communication 424 and in a fifth communication 426, the initial AMF/SAEF 406 determines to reroute the NAS message to the T-AMF/SAEF 410 via NG-RAN (e.g., as the initial AMF/SAEF 406 is not the appropriate AMF to serve the UE 402). To facilitate security context provisioning to the T-AMF/SAEF 410, the initial AMF/SAEF 406 sends an AMFRealloc_Security context request message (or over any new equivalent AUSF service-operation message) to the AUSF 412 which includes target AMF information (e.g., AMF set, AMF instance ID, AMF_Reroute_Security required indication, temporary UE ID (e.g., SUCI and/or 5G-GUTI), serving network name ("SNN"), routing information required indication, and/or SUPI).

On receiving the AMFRealloc_SecurityContext request message, the AUSF 412 based on the SUCI, 5G-GUTI, and/or SUPI and/or based on the received routing information required indication, assigns 428 routing information corresponding to the SUPI of the UE 402. The routing information assigned by the AUSF 412 may be any address, FQDN, and/or AUSF instance ID which enables any requesting NF to identify, discover, and/or select the right AUSF instance holding the corresponding SUCI and/or 5G-GUTI and SUPI related UE context. Based on the SUPI, the SNN identifies the locally stored security context (e.g., Kseaf and/or AUSF). Further, the AUSF 412 generates the authentication information reroute security context (e.g., NAS_Sec_ID and/or AMF _AUTN). NAS_Sec_ID is the hash code of security anchor key and/or SUPI and target AMF information, which enables the AUSF 412 to authenticate the T-AMF/SAEF 410 to fetch any specific security context at a later point of time. It should be noted that the authentication information generated by the AUSF 412 may be indicated as NAS_Sec_ID or AMF_AUTN.

In a sixth communication 430, the AUSF 412 sends NAS_Sec_ID and AUSF routing information to the initial AMF/SEAF 406 in the AMFRealloc_Security context response message (or over any new equivalent AUSF service-operation message).

In a seventh communication 432, the initial AMF/SEAF 406 sends the reroute NAS message along with NAS_Sec_ID, AUSF routing information, and UDM routing information to the T-AMF/SEAF 410 via the NG-RAN 404. The additional information includes target AMF information.

In certain embodiments, if the initial AMF/SEAF 406 has a SUCI and/or SUPI and AUSF and/or UDM routing information locally stored or fetched from the old AMF 408 (e.g., an AUSF group ID, AUSF routing information, UDM group ID, and/or UDM routing information), the AMF may provide the routing information (e.g., with AUSF and/or UDM routing information) to the T-AMF/SEAF 410 via the NG-RAN 404 along with the reroute NAS message.

In some embodiments, if the initial AMF/SEAF 406 has a SUCI and/or SUPI and UDM routing information (e.g., UDM group ID and/or UDM routing information), the AMF may provide the routing information (e.g., with AUSF provided AUSF routing information and locally stored UDM routing information) to the T-AMF/SEAF 410 via the NG-RAN 404 along with the reroute NAS message.

In various embodiments, if the T-AMF/SEAF 410 can select the right UDM and/or UDR instance after getting the SUPI from AUSF at a later step 442, then the initial AMF/SEAF 406 may need to provide only AUSF routing information (e.g., may need not to provide the UDM routing information) to the T-AMF/SEAF 410 during reroute via a RAN.

In an eighth communication 434, the NG-RAN 404 forwards the received reroute NAS message to the appropriate T-AMF/SEAF 410 along with the routing information.

After receiving the reroute NAS message with NAS_Sec_ID and routing information, the T-AMF/SEAF 410, based on NAS_Sec_ID, determines 436 to fetch the corresponding security context from the AUSF 412 to handle the received rerouted NAS message. The routing information in the SUCI and AUSF routing information may be used to select the right AUSF 412 which holds the UE security context. The T-AMF/SEAF 410 locally stores the received AUSF routing information.

In a nineth communication 438, the T-AMF/SEAF 410 sends the NASKey_Request message to the AUSF 412 with the SUCI, NAS_Sec_ID, SNN, and/or T-AMF/SEAF 410 information (e.g., AMF ID or network slice instance ("NSI") ID, and so forth).

The AUSF 412, on receiving the NAS_Sec_ID, SUCI, and AMF information, fetches 440 the SUCI-SUPI pair and related information and further verifies the NAS_Sec_ID to authenticate the T-AMF/SEAF 410 to provide the security information. The AUSF 412 verifies the SNN to check if the AMF is authorized to use the corresponding SNN. If the NAS_Sec_ID validation and SNN verification is successful, the AUSF 412 generates the new NAS security context (e.g., Kamf and/or Kseaf) corresponding to the SNN for the UE SUPI to be provided for the T-AMF/SEAF 410. The AUSF 412 and/or SEAF can use the new target AMF information (e.g., AMF ID and/or AMF set ID) as an input parameter along with the other inputs for the AMF key generation. It should be noted that, if required, the AUSF 412 may provision a security context (e.g., stored or new Kseaf corresponding to an SNN and SUPI) to a reallocated T-AMF/SEAF 410, where the related service operation may be defined as a key request and/or response message accordingly.

In a tenth communication 442, the AUSF 412 sends to the T-AMF/SEAF 410 the NASKey_Response message containing SUPI, NAS_Sec_ID, Kamf, N-NSCI (e.g., to indicate the target AMF that the Kamf is derived from the anchor key - either directly or via SEAF), and a special ABBA parameter (e.g., to indicate slice specific security feature defined for 5G). In certain embodiments, the T-AMF/SEAF 410 derives the Kamf from the received Kseaf. The AUSF 412 deletes the locally stored AMF reallocation related UE context (e.g., authentication information such as NAS_Sec_ID, AMF_AUTN, 5G-GUTI, SUCI, and/or target AMF information) after sending the key response to the T-AMF/SEAF 410.

In an eleventh communication 444, the T-AMF/SEAF 410 initiates an NAS security mode command with the UE 402 by sending the target AMF information, slice specific ABBA, and N-NSCI flag set to 1 (e.g., to derive a new AMF key from AUSF and/or SEAF key) to align the new NAS security context with the UE 402. The T-AMF/SEAF 410 locally stores the received SUPI, reroute security context such as NAS_Sec_ID, N-NSCI, Kamf, AUSF routing information, and/or the special ABBA parameter along with the ngKSI.

In some embodiments, target AMF information received by a UE may allow the UE to use the new target AMF information (e.g., AMF ID and/or AMF set ID) as an input parameter along with the other inputs for the AMF key generation.

In various embodiments, the T-AMF/SEAF 410 selects the NAS security algorithms (e.g., integrity and ciphering algorithms) based on UE security capabilities and sends a NAS security mode command message to the UE 402 which contains the new NAS security context indicator ("N-NSCI"), and the special ABBA parameter value (e.g., 0x0001 to indicate the slice specific feature supported in a 5G system ("5GS") to meet vertical slice isolation requirements).

In certain embodiments, the UE 402, on receiving the N-NSCI in the NAS security mode command message, uses an anchor key locally stored or newly derived (e.g., as indicated with a special anti-bidding down between architectures ("ABBA")) to derive a Kamf similar to the one available in a target AMF. The UE 402 uses the received special ABBA value and N-NSCI received in the Kamf generation. The UE 402, on receiving the special slice specific ABBA parameter, releases other old AMF connections (e.g., if any) and associated security for the SNN related to corresponding access for which a new NAS connection is established and retains only the latest NAS connection and security.

In some embodiments, the UE 402, after a successful validation of an NAS security mode command message, sends an NAS security mode complete message to the T-AMF/SEAF 410. The UE 402, on receiving the special slice specific ABBA parameter, releases any old NAS connection for the similar access type for which it has a new NAS connection and security established. After a successful NAS security mode command procedure between the T-AMF/SEAF 410 and the UE 402, the rest of the procedure executes similar to the existing 5G system.

In a twelfth communication 446, the T-AMF/SEAF 410, based on the received SUPI from the AUSF, can select the right UDM and/or UDR instance (e.g., by itself or using a NRF) to update the UE authentication status, subscription data, and target AMF information (e.g., to perform Nudm service operations for the UE 402) accordingly.

In a second embodiment, there may be a method to allow the initial AMF to check its capability to serve a UE during primary authentication before providing a UE security context. In the second embodiment, an initial AMF may be enabled to verify the UE's slice subscription data well in-advance (e.g., before NAS security set up with UE) to determine if it is capable to serve the UE before receiving any UE security context from a AUSF. Further, this may allows an AMF to avoid NAS security establishment with a UE if the AMF is not capable to serve the UE, and so a registration failure and system availability issues during the UE registration may be reduced.

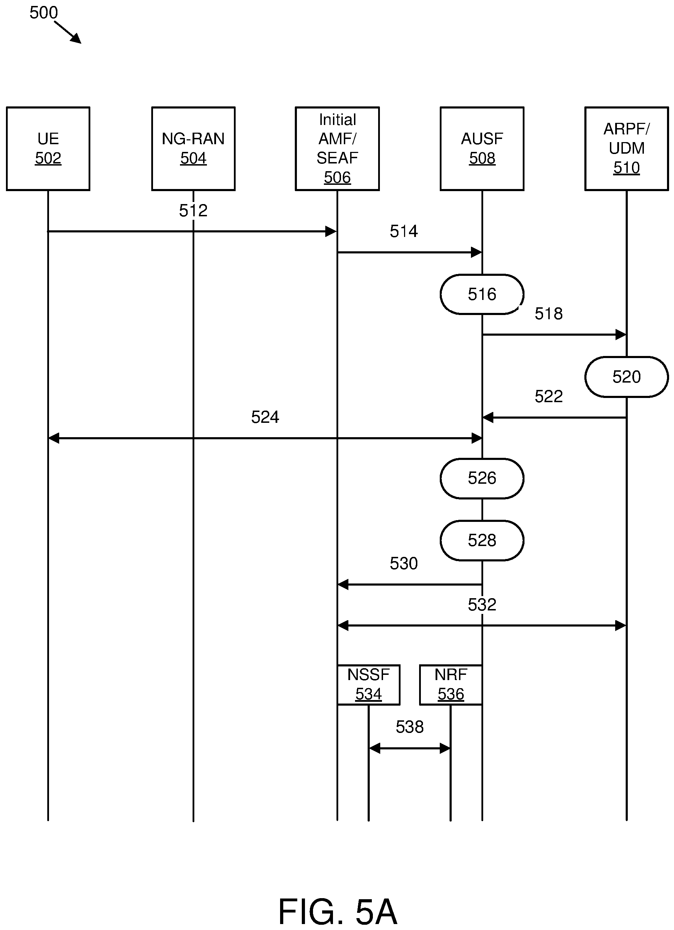

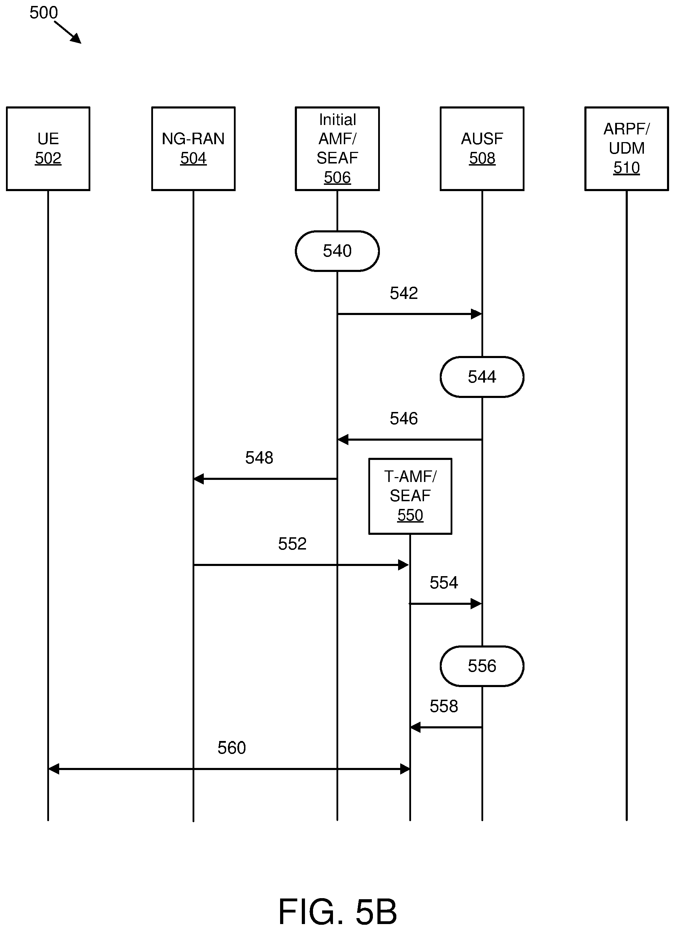

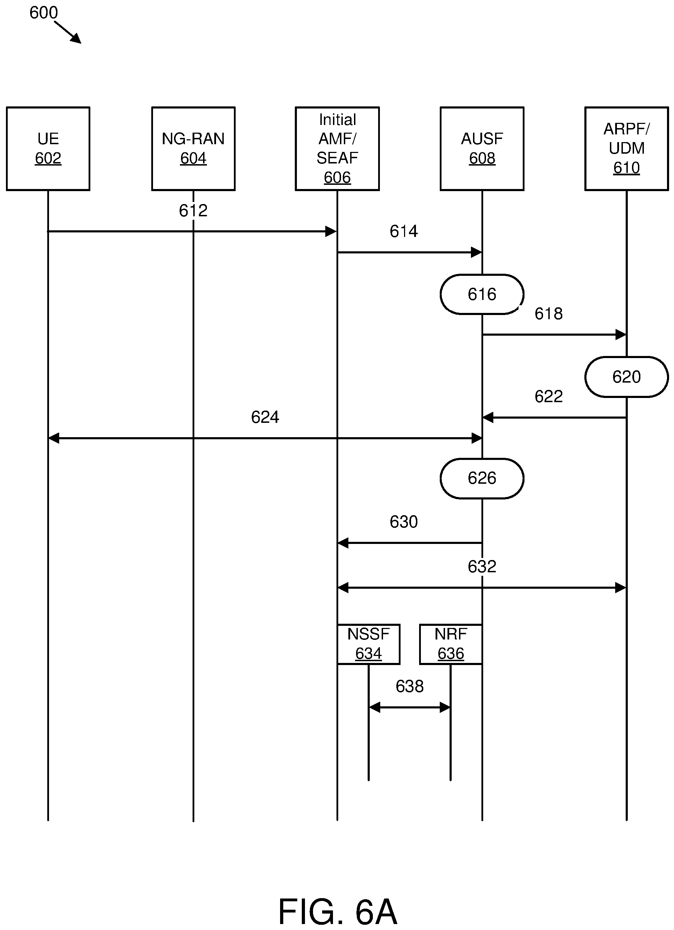

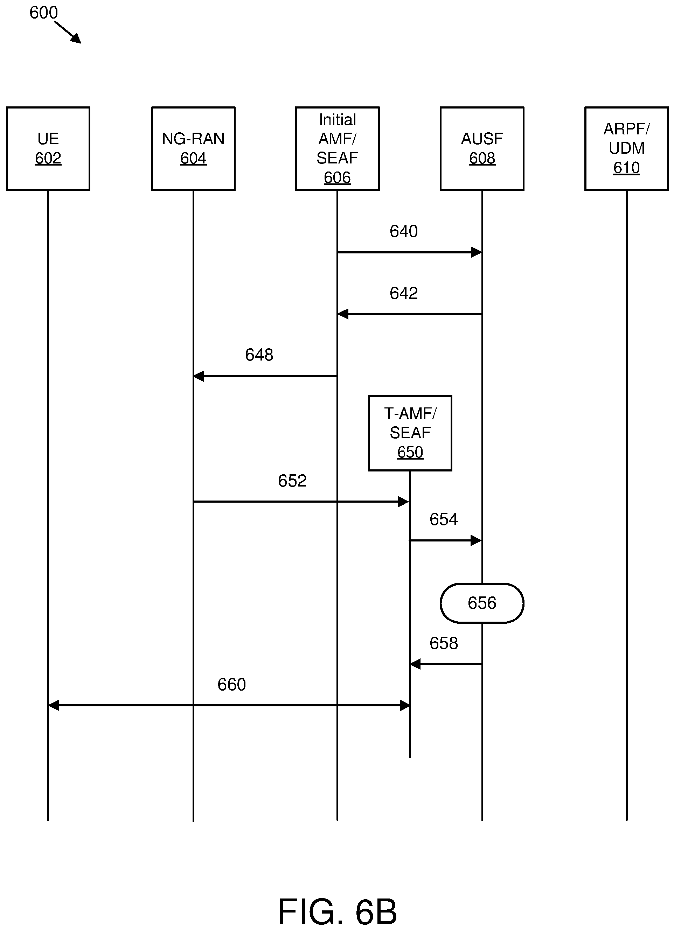

The second embodiment may be based on the principle of enabling an initial AMF to verify a UE's slice subscription data soon after and/or during primary authentication to determine whether an AMF is capable to serve a UE before the UE's security context can be provisioned to the initial AMF during the primary authentication to prevent system availability issues. Figures 6A and 6B describes UE slice subscription data-based AMF serving capability verification and UE security handling and/or provisioning to an AMF/SEAF during primary authentication as. Moreover, essential adaptations required over initiation of primary authentication and authentication procedure are described in relation to Figures 5A and 5B.

Figures 5A and 5B are schematic block diagrams illustrating one embodiment of a system 500 for AMF slice serving capability based security handling during primary authentication. The system 500 includes a UE 502, an NG-RAN 504, an initial AMF/SEAF 506, an AUSF 508, and an authentication credential repository and processing function ("ARPF") and/or UDM ("ARPF/UDM") 510. Each of the communications described may include one or more messages.

In a first communication 512, the UE 402 sends a registration request message with SUCI or 5G-GUTI to the initial AMF/SEAF 506.

In a second communication 514, the initial AMF/SEAF 506 forwards the received initial UE message containing registration request to the SEAF by including the slice selection information not available and/or slice selection information unknown indication if the initial AMF/SEAF 506 received a registration request message with a limited set of information elements ("IEs") (e.g., called the cleartext IEs) as there was no NAS security (or if the initial AMF could not identify any AMF related to the 5G-GUTI received in the registration request message). The SEAF further sends a Nausf_UEAuthentication_Authenticate request message to the AUSF 508, which may contain SUCI, SUPI, SNN, slice selection information not available, and/or slice selection information unknown indication. The slice selection information not available and/or slice selection information unknown indication may indicate that the initial AMF which received the UE registration request has no available information (e.g., requested network slice selection assistance information ("NSSAI") or any slice information for the UE 502) which may enable the network to select the appropriate slice. The initial AMF/SEAF 506 may determine to include a slice selection information not available and/or slice selection information unknown indication based on SUCI, SUPI, and/or local AMF policy in any AUSF service operation message that is sent to AUSF 508. The AUSF 508 may store 516 the SUCI and/or other information.

In various embodiments, for mobility registration update, if the initial AMF/SEAF 506 has access to a UE security context or if the initial AMF/SEAF 506 has access to SUPI of the UE 502, then the initial AMF may need not include a slice selection info unknown indication.

In a third communication 518, the AUSF 508 sends to the ARPF/UDM 510 a Nudm_UEAuthentication_Get request containing, SUCI, SUPI, and/or SNN. The AUSF 508, on receiving the slice selection information not available and/or slice selection information unknown indication determines that the AMF in the serving network needs further information to verify the serving capability for the corresponding UE. In certain embodiments, the AUSF 508 sends to the ARPF/UDM 510 a Nudm_UEAuthentication_Get request containing SUCI, SUPI, SNN, and/or slice selection information not available and/or slice selection information unknown indication.

The ARPF/UDM 510 performs 520 a SUCI de-concealment and authentication method selection.

In some embodiments, if the ARPF/UDM 510 receives a Nudm_UEAuthentication_Get request containing SUCI, SUPI, SNN, and/or a slice selection information not available and/or slice selection information unknown indication, then the ARPF/UDM 510 checks the UE subscription information and slice selection subscription data to see if any of the subscribed single NSSAI ("S-NSSAI") or slice requires isolation or has strict service and/or security isolation requirements. It should be noted that the slice subscription data stored in the ARPF/UDM 510 may include information about slice isolation requirements (e.g., based on a vertical slice service and security requirements).

In a fourth communication 522, the ARPF/UDM 510 sends a Nudm_UEAuthentication_Get response to the AUSF 508 which contains an AV (e.g., extensible authentication protocol ("EAP") authentication and key agreement ("AKA")' ("EAP-AKA'") AV and/or 5G HE AV based on an authentication method) and SUPI. In various embodiments, if the ARPF/UDM 510 receives a slice selection information not available and/or slice selection information unknown indication or if the UDM determines that that a slice and/or service isolation is required based on slice subscription data and/or UE subscription information, then the ARPF/UDM 510 sends a Nudm_UEAuthentication_Get response to the AUSF 508, which contains an AV (e.g., EAP-AKA' authentication vector ("AV") and/or 5G HE AV based on an authentication method), SUPI, slice subscription data, slice service, and/or slice security isolation required indicator.

In certain embodiments, if the ARPF/UDM 510 determines that a UE has a slice service and/or security isolation requirement based on corresponding UE subscription information and UE slice selection subscription data, then the ARPF/UDM 510 sends a slice security and/or service isolation required indicator in any UDM service operation message to the AUSF 508 during primary authentication (e.g., in a Nudm_UEAuthentication_Get response message).

In a fifth communication 524, the AUSF 508 performs a method specific message exchange with the UE 502 to perform primary authentication.

The AUSF 508, if it finds that a response verification 526 (e.g., if 5G AKA) or authentication challenge verification (e.g., EAP-AKA') is successful, then the 5G network considers the primary authentication as successful.

Post successful authentication verification at the AUSF 508, if a slice selection information not available and/or slice selection information unknown indication was received in step 514 from the initial AMF/SEAF 506, then the AUSF 508 determines 528 not to provide the UE security context (e.g., Kseaf) to the initial AMF/SEAF 506 until the initial AMF/SEAF 506 informs the AUSF 508 that it is capable of serving the corresponding UE 502.

In various embodiments, if the AUSF 508 receives a slice subscription data from the ARPF/UDM 510 post successful authentication verification at the AUSF 508, it provides the slice subscription data to the initial AMF/SEAF 506 along with the authentication result (e.g., SUPI and anchor key).

In certain embodiments, if the AUSF 508 receives slice subscription data and/or a slice isolation required indicator from the ARPF/UDM 510 post successful authentication verification at the AUSF 508, the AUSF 508 determines to hold the UE security context (e.g., anchor key provisioning to the initial AMF/SAEF 506) until the AMF/SAEF 506 provides an acknowledgement to the AUSF 508 that it (e.g., the AMF) is capable to serve the UE 502 based on the slice selection subscription data and the SUPI.

In a sixth communication 530, if the AUSF 508 received a slice selection information not available and/or a slice selection info unknown indication, then the AUSF 508 determines to hold the UE 502 security and after response verification, the AUSF 508 can send the SUPI to the initial AMF/SEAF 506 along with an AMF serving capability check required indication and acknowledgement required indication in a Nausf_UEAuthentication_Authenticate response message.

In some embodiments, if the AUSF 508 receives slice subscription data and/or a slice isolation required indicator from the ARPF/UDM 510 post successful authentication verification at the AUSF 508, the AUSF 508 determines to hold the UE security context (e.g., anchor key provisioning to the initial AMF/SEAF 506) until the AMF provides an acknowledgement to the AUSF 508, that it (e.g., the AMF) is capable to serve the UE 502 based on the slice selection subscription data and SUPI. The AUSF 508 may send the SUPI and slice selection subscription data to the AUSF 508 along with an AMF serving capability check required indication and an acknowledgement required indication in a Nausf_UEAuthentication_Authenticate response message.

In various embodiments, if the AUSF 508 receives slice subscription data and/or a slice isolation required indicator from the ARPF/UDM 510 post successful authentication verification at the AUSF 508, the AUSF 508 may send the authentication result, SUPI, anchor key, slice subscription data, and/or a slice isolation required indicator to the AUSF 508 along with an AMF serving capability check required indication and acknowledgement required indication in a Nausf_UEAuthentication_Authenticate response message.

In a seventh communication 532 and an eighth communication 538 (the system 500 further includes an NSSF 534 and an NRF 536). The initial AMF/SEAF 506, on receiving the SUPI along with AMF serving capability check required indication and/or acknowledgement required indication, fetches the subscription information from the ARPF/UDM 510 (e.g., the initial AMF/SEAF 506 sends to the ARPF/UDM 510 a Nudm_SDM _Get (e.g., SUPI, slice selection subscription data) service operation message and receives from the ARPF/UDM 510 a Nudm_SDM_Get (e.g., SUPI, slice selection subscription data) service operation message. The initial AMF/SEAF 506, based on SUPI and slice subscription data, determines whether a reroute of NAS or AMF reallocation is required. Further, the initial AMF/SEAF 506 performs slice selection using a Nnssf_NSSelection_Get service operation with the NSSF. If the initial AMF/SEAF 506 does not locally store a target AMF address, and if the initial AMF intends to use direct reroute to target AMF or the reroute via NG-RAN 504 message needs to include the initial AMF/SEAF 506 address, then the initial AMF/SEAF 506 invokes the Nnrf_NFDiscovery_Request service operation from the NR function ("NRF") to find a proper target AMF which has required NF capabilities to serve the UE 502.

In certain embodiments, the initial AMF/SEAF 506, on receiving the SUPI and an authentication result along with slice selection subscription data and/or a slice isolation required indicator, an AMF serving capability check required indication, and/or acknowledgement required indication, determines to perform AMF service capability verification by invoking Nudm_SDM_Get service operation with the ARPF/UDM 510, to provide its AMF service capability result to the AUSF 508 as an acknowledgement to fetch a UE security context.

In some embodiments, an initial AMF/SEAF 506, on receiving the SUPI, the AMF key, an anchor key, an authentication result along with slice selection subscription data and/or a slice isolation required indicator, an AMF serving capability check required indication, and/or acknowledgement required indication, determines not to use the received UE security context (e.g., AMF key) and determines not to perform NAS security mode command ("SMC") with the UE before the service capability of the AMF is determined (or until the AMF determines that it is capable to serve the UE). Further the AMF performs AMF service capability verification by invoking existing service operations such as Nudm_SDM_Get service operation with the ARPF/UDM 510, network slice selection using NSSF service operation and/or NF discover service operation with NRF, to provide its AMF service capability result to the AUSF 508 as an acknowledgement to fetch a UE security context.

If the initial AMF/SEAF 506 determines 540 to perform an indirect AMF reroute based on step 532 and 538, then the initial AMF/SEAF 506 determines not to fetch UE security context from the AUSF 508, and the initial AMF/SEAF 506 determines to facilitate the UE security context provisioning to the newly selected target AMF via the AUSF.

In various embodiments, if the initial AMF/SEAF 506 determines to perform indirect AMF rerouting via a RAN, then initial AMF/SEAF 506 sets the AMF service capability result as slice not compatible, failure, unsuccessful, and/or "0" indication and with cause indirect AMF re-allocation required.

In certain embodiments, if the initial AMF/SEAF 506 determines to perform direct AMF rerouting and/or if initial AMF/SEAF 506 is capable to serve the UE 502 based on the UE subscription information and/or slice subscription data, then the initial AMF/SEAF 506 sets the AMF service capability result as slice compatible, success, and/or a "1" indication and with cause current AMF is capable to serve the UE 502 and/or capable serving AMF.

In some embodiments, to adapt for mobility registration update, the initial AMF/SEAF 506 may always perform an AMF service capability check before initiating a NAS SMC with the UE 502.

In a nineth communication 542, the initial AMF/SEAF 506 sends to the AUSF 508 a Nausf_UEAuthentication_Authenticate request which contains SUPI, an AMF_Reroute_SecurityRequired indication, a slice incompatible indication, a new AMF reallocated indication (or a reallocation security context required indicator), target AMF information (e.g., AMF ID and/or AMF instance ID), and/or subscription concealed identifier ("SUCI").

In various embodiments, the initial AMF/SEAF 506 sends to the AUSF 508 a Nausf_UEAuthentication_Authenticate request which contains SUPI, an AMF _Reroute_SecurityRequired indication, an AMF service capability result with slice not compatible, failure, unsuccessful, and/or "0 indication and/or a slice incompatible indication, a new AMF reallocated indication, target AMF information (e.g., AMF ID and/or AMF instance ID), and/or SUCI.

In certain embodiments, the initial AMF/SEAF 506 sends to the AUSF 508 a Nausf_UEAuthentication_Authenticate request which contains SUPI, AMF service capability result with slice compatible, success, and/or a "1" indication and/or slice compatible indication and/or current AMF is capable to serve the UE 502 and/or capable serving AMF, and/or Key request indication.

The AUSF 508 on receiving a new AMF reallocated indication and/or slice incompatible indication, AMF_Reroute_SecurityRequired indication, the AUSF 508 determines 544 to store the UE security context (e.g., AUSF and SEAF Key) to facilitate the security provisioning to the target AMF at a later point of time when required (e.g., after reallocation). The AUSF 508 derives an authentication information from the UE context available in the AUSF 508 (e.g., NAS_Sec ID and/or an AMF_AUTN have the same meaning as they refer to the authentication information generated by the AUSF) for the target AMF using the hash of AUSF or SEAF Key, SUPI, random key ("RAND"), serving network name ("SNN"), and/or the target AMF.

In some embodiments, the AUSF 508, on receiving from the initial AMF/SEAF 506 an AMF service capability result with slice compatible, success, and/or a "1" indication and/or a slice compatible indication, a current AMF is capable to serve the UE 502, a capable serving AMF, and/or key request indication, the AUSF 508 provides the anchor key, SUPI, and authentication result to the initial AMF, and the initial AMF may setup NAS security similar to an existing system.

In a tenth communication 546, the AUSF 508 sends a Nausf_UEAuthentication_Authenticate response message to the initial AMF/SEAF 506 which contains an authentication result as success, SUPI, AMF_AUTN, and/or routing information. The AUSF 508 locally stores the AMF_AUTN along with the AMF incompatibility indication, AMF reallocated indication, SUPI with SUCI, Kausf, Kseaf, and/or corresponding SNN. The initial AMF/SEAF 506 forwards the received SUPI, authentication result as success, SUPI, AMF_AUTN, and/or routing information to the initial AMF/SEAF 506.

In an eleventh communication 548, the initial AMF/SEAF 506, on receiving the SUPI, authentication result, and AMF_AUTN, finds that the initiated primary authentication procedure for the UE 502 with SUCI was successful, but no NAS security (e.g., Kamf) was provided due to AMF's slice incompatibility as AMF is not capable to serve the UE 502 based on SUPI and slice subscription data. The initial AMF/SEAF 506 sends a reroute NAS message to the NG-RAN with initial UE message, slice incompatibility indication, routing information, and/or AMF_AUTN. The system 500 includes a T-AMF/SEAF 550.

In a twelfth communication 552, the NG-RAN 504 forwards the received reroute NAS message to the T-AMF/SEAF 550 with an initial UE message, a slice incompatibility indication, routing information, and/or AMF_AUTN.

In a thirteenth communication 554, the T-AMF/SEAF 550, on receiving the reroute NAS message with slice incompatibility indication, routing information, and/or AMF _AUTN will attempt to contact the right AUSF (either directly or via co-located SEAF) based on the routing ID and/or routing information. The T-AMF/SEAF 550 sends to appropriate AUSF 508, the Nausf_UEAuthentication_Authenticate request containing the SUCI, SNN, and/or the received AMF_AUTN (e.g., to authenticate itself with AUSF 508 to fetch the UE security context).

The AUSF 508 verifies 556 the received AMF_AUTN based on the UE authentication information locally stored and verifies the SNN based on the locally stored information. If the T-AMF/SEAF 550 provided AMF_AUTN matches with the locally stored AMF_AUTN for a SUCI and SUPI, then the AUSF 508 considers the AMF_AUTN verification (e.g., reallocated AMF authentication) as successful and fetches the corresponding UE security context (e.g., Kausf and Kseaf) or derives a Kseaf if not available already.

In a fourteenth communication 558, the AUSF 508 sends to the T-AMF/SEAF 550, the key request and/or Nausf_UEAuthentication_Authenticate request message containing an authentication result, a SUPI, and/or a Kseaf (the anchor key). Further, the SEAF sends the ABBA parameters, authentication result as success, and Kamf key to the T-AMF/SEAF 550. In some embodiments, for an AMF reallocation scenario, the AUSF 508 sends to the T-AMF/SEAF 550, the key response and/or Nausf_UEAuthentication_Authenticate response message containing an authentication result, a SUPI, and/or a Kamf (e.g., derived from Kseaf).

In a fifteenth communication 560, the T-AMF/SEAF 550, on receiving the Kamf and authentication result triggers an NAS security mode command (e.g., NAS SMC) procedure with the UE 502 to set up the UE NAS security context. The T-AMF/SEAF 550 may send its AMF identification information in the NAS security mode command message. The UE 502, on receiving a AMF identification information, can use the AMF identification information as one of the input parameters in the Kamf key derivation function.

Figures 6A and 6B are schematic block diagrams illustrating one embodiment of a system 600 for AMF serving capability based security handling during primary authentication. The system 600 includes a UE 602, an NG-RAN 604, an initial AMF/SEAF 606, an AUSF 608, and ARPF/UDM 610. Each of the communications described may include one or more messages.

In a first communication 612, the UE 602 sends a registration request message with SUCI or 5G-GUTI to the initial AMF/SEAF 606.

In a second communication 614, the initial AMF/SEAF 606 forwards the received initial UE message containing the registration request message to the SEAF by including the AMF slice serving capability set as unknown. The AMF can set the AMF serving capability as unknown based on SUCI and/or if there is no slice selection information and/or UE 602 access and mobility context available for the UE 602. The SEAF further sends a Nausf_UEAuthentication_Authenticate request message to the AUSF 608, which can contain SUCI, SUPI, SNN, and/or AMF slice serving capability.

The AUSF 608 stores 616 the received SNN and SUCI and/or SUPI temporarily in its local memory. In a third communication 618, the AUSF 608 sends to the ARPF/UDM 610 a Nudm_UEAuthentication_Get request containing SUCI, SUPI, and/or SNN.

The ARPF/UDM 610 performs 620 SUCI deconcealment and authentication method selection. Further, the UDM determines if there is any slice isolation required based on the available subscription information (e.g., slice selection subscription data). If slice isolation requirement information is available, then the UDM determines to provide the related information to the AUSF 608.

In a fourth communication 622, the UDM sends a Nudm_UEAuthentication_Get Response to the AUSF 608, which contains an AV (e.g., EAP-AKA' AV and/or 5G HE AV based on an authentication method), SUPI, and/or slice isolation required indication.

In a fifth communication 624, the AUSF 608 performs method specific message exchange with the UE 602 to perform primary authentication.

The AUSF 608, if it finds that the response verification (e.g., if 5G AKA) or the authentication challenge verification (e.g., EAP-AKA') is successful, then the 5G network considers 626 the primary authentication as successful. Post successful authentication verification at the AUSF 608, if a AMF serving capability unknown was received from initial AMF/SEAF 606 and/or if a slice isolation required indication was received from the UDM, then the AUSF 608 determines to hold the UE security context until an acknowledgement is received from the initial AMF/SEAF 606, that it is capable to serve the UE 602. In some embodiments, the AUSF 608 may provide security context in addition to sending a slice isolation required indication.

In a sixth communication 630, the AUSF 608 sends to the AMF/SEAF 606, a Nausf_UEAuthentication_Authenticate request message which includes authentication result as success, SUPI, and/or an AMF serving capability check required indication. In various embodiments, the anchor key is also provided.

In a seventh communication 632 and an eight communication 638 (e.g., between an NSSF 634 and an NRF 636 of the system 600), the initial AMF/SEAF 606 on receiving an AMF serving capability check required indication performs various steps if needed. The initial AMF/SEAF 606, based on local policy and subscription information, decides to reroute via RAN then performs steps 640 through 660. Also, the AMF determines not to use the received security context (e.g., if received). If the AMF finds that it is capable to serve the UE 602 (e.g., a reroute via RAN is not needed), and if no security context is received in addition to AMF serving capability check required indication, then the initial AMF/SEAF 606 can perform steps to fetch a UE security context and then to continue with NAS SMC.

In a nineth communication 640, the initial AMF/SEAF 606, if it determines to perform a reroute via RAN, then it sends SUPI, AMF serving capability result set to "0", an AMF reroute security required indication, and/or target AMF information in an AUSF service operation message to the AUSF 608. In certain embodiments, the initial AMF/SEAF 606, if is determines that it is capable to serve the UE (e.g., no reroute via RAN is determined), is sends SUPI and AMF serving capability result set to '1' to the AUSF 608. In some embodiments, the AUSF 608, on receiving SUPI and an AMF serving capability result set to "1", determines to provide the UE security context to the initial AMF/SEAF 606 and then the AUSF 608 can send SUPI, an authentication result, and/or an anchor key to the initial AMF/SEAF 606.

In a tenth communication 642, the AUSF 608, on receiving an AMF serving capability result set to '0' with an AMF reroute security required indication, determines that it needs to provide the security to a new Target AMF and not to the current AMF. Further, as a reroute security context is requested, the AUSF 608 derives an AMF authentication token (e.g., AMF_AUTN) using hash of AUSF key, SUPI, and/or RAND. The AUSF 608 locally stores the AMF_AUTN along with the AMF incompatibility indication as cause, SUPI with SUCI, Kausf, and/or Kseaf (e.g., if available). The AUSF 608 further sends AMF_AUTN in an AUSF service operation message to the initial AMF/SEAF 606.

In an eleventh communication 648, the initial AMF/SEAF 606, based on local policy and subscription information if it decides to reroute via RAN, sends a reroute NAS message to the NG-RAN 604 which contains the initial UE message, routing information (e.g., to select the AUSF 608 instance holding the UE context), and/or AMF_AUTN. The system 600 includes a T-AMF/SEAF 650.

In a twelfth communication 652, the NG-RAN 604 forwards a received reroute NAS message to the T-AMF/SEAF 650 with an initial UE message, a slice incompatibility indication, AMF_AUTN, and/or routing information.

In a thirteenth communication 654, the T-AMF/SEAF 650, on receiving the reroute NAS message with AMF_AUTN, may attempt to contact the right AUSF (e.g., either directly or via co-located SEAF) based on the routing information. The T-AMF/SEAF 650 sends to the appropriate AUSF, a Nausf_UEAuthentication_Authenticate request containing SUCI, SNN, and/or the received AMF _AUTN (e.g., to authenticate itself with AUSF to fetch the UE security context).

The AUSF 608 verifies 656 the received AMF_AUTN based on the UE authentication information locally stored. If the T-AMF/SEAF 650 provided AMF_AUTN matches with the locally stored AMF_AUTN for a SUCI, then the AUSF 608 considers the AMF_AUTN verification (e.g., reallocated AMF authentication) as successful and determines to provide the anchor key.

In a fourteenth communication 658, the AUSF 608 sends to an SEAF of the T-AMF/SEAF 650, the Nausf_UEAuthentication_Authenticate response containing an authentication result, SUPI, and/or Kseaf (e.g., the anchor key). Further, the SEAF sends the ABBA parameters, authentication result as success, and/or Kamf key to the T-AMF/SEAF 650.

In a fifteenth communication 660, the T-AMF/SEAF 650, on receiving the Kamf and authentication result, triggers the NAS security mode command (e.g., NAS SMC) procedure with the UE 602 to setup the UE NAS security context.

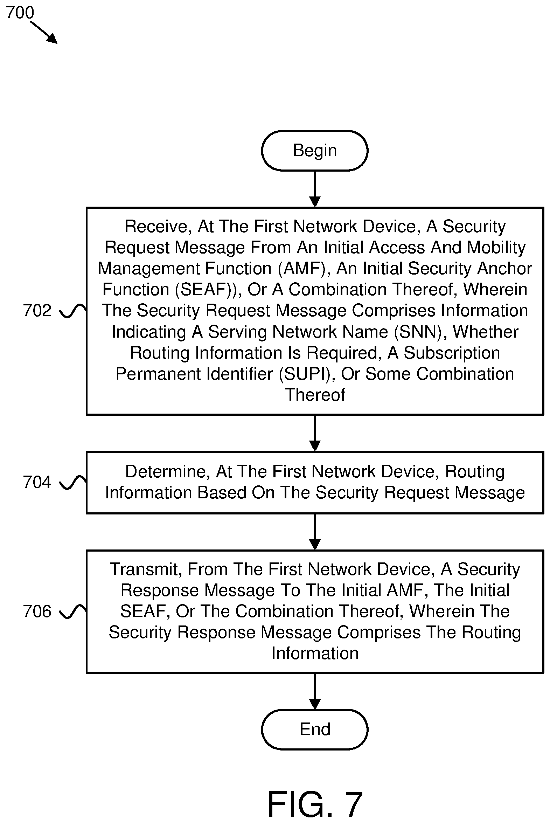

Figure 7 is a flow chart diagram illustrating one embodiment of a method 700 for network security based on routing information. In certain embodiments, the method 700 describes a NF (e.g., AUSF, UDM) selection and security context provisioning for a re-allocated AMF during an AMF reallocation and includes an indirect reroute. In some embodiments, the method 700 is performed by an apparatus, such as the network unit 104. In certain embodiments, the method 700 may be performed by a processor executing program code, for example, a microcontroller, a microprocessor, a CPU, a GPU, an auxiliary processing unit, a FPGA, or the like.

In various embodiments, the method 700 includes receiving 702, at a first network device, a security request message from an initial access and mobility management function (AMF), an initial security anchor function (SEAF)), or a combination thereof. The security request message includes information indicating a serving network name (SNN), whether routing information is required, a subscription permanent identifier (SUPI), or some combination thereof. In some embodiments, the method 700 includes determining 704, at the first network device, routing information based on the security request message. In certain embodiments, the method 700 includes transmitting 706, from the first network device, a security response message to the initial AMF, the initial SEAF, or the combination thereof. The security response message includes the routing information.

In certain embodiments, the method 700 further comprises receiving a key request message from a target AMF, a target SEAF, or a combination thereof, wherein the key request message comprises information indicating the SNN, the target AMF, or a combination thereof. In some embodiments, the method 700 further comprises deriving a key based on the key request message, wherein deriving the key based on the key request message comprises deriving the key based on the target AMF. In various embodiments, the method 700 further comprises verifying the SNN to verify whether the target AMF is authorized to use the SNN.

In one embodiment, the method 700 further comprises: transmitting a key response message to the target AMF, the target SEAF, or the combination thereof, wherein the key response message comprises the key; and deleting locally stored user equipment (UE) context information in response to transmitting the key response message. In certain embodiments, the first network device comprises an authentication server function (AUSF), a network function (NF), or a combination thereof. In some embodiments, the routing information comprises an AUSF instance identifier (ID), a unified data management (UDM) instance ID, an AUSF group ID, a UDM group ID, AUSF identification information, UDM identification information, a routing indicator, network routing information, an AUSF address, a UDM address, or some combination thereof.

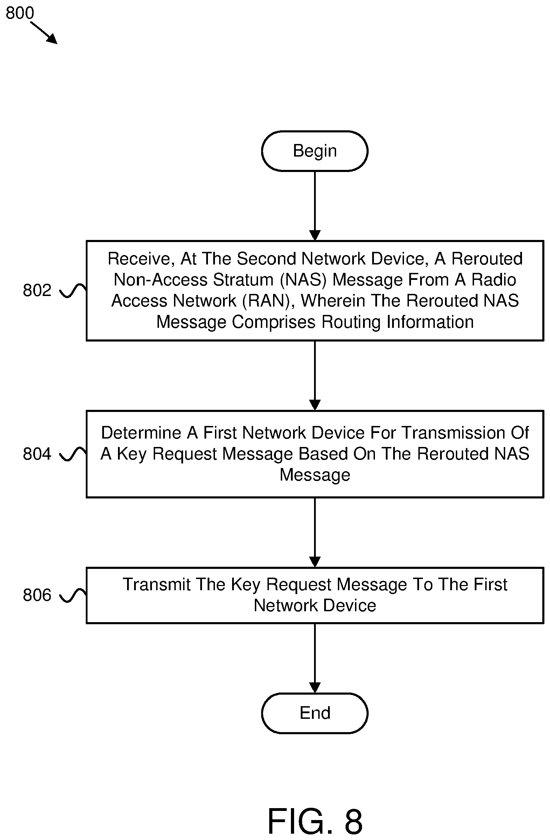

Figure 8 is a flow chart diagram illustrating another embodiment of a method 800 for network security based on routing information. In some embodiments, the method 800 is performed by an apparatus, such as the network unit 104. In certain embodiments, the method 800 may be performed by a processor executing program code, for example, a microcontroller, a microprocessor, a CPU, a GPU, an auxiliary processing unit, a FPGA, or the like.

In various embodiments, the method 800 includes receiving 802, at a second network device, a rerouted non-access stratum (NAS) message from a radio access network (RAN). The rerouted NAS message includes routing information. In some embodiments, the method 800 includes determining 804 a first network device for transmission of a key request message based on the rerouted NAS message. In certain embodiments, the method 800 includes transmitting 806 the key request message to the first network device.

In certain embodiments, the method 800 further comprises selecting a third network device based on the routing information, wherein the third network device comprises a unified data management (UDM). In some embodiments, the second network device comprises a target access and mobility management function (AMF), a target security anchor function (SEAF)), or a combination thereof. In various embodiments, the method 800 further comprises initiating an NAS security mode command with a UE, wherein initiating the NAS security mode command comprises transmitting target AMF information, transmitting an NAS security context indicator (NSCI) flag set to 1, or a combination thereof.

In one embodiment, the target AMF information is used as an input for AMF key generation. In certain embodiments, the method 800 further comprises storing the routing information.

In some embodiments, the first network device comprises an authentication server function (AUSF), a network function (NF), or a combination thereof. In various embodiments, the routing information comprises an AUSF instance identifier (ID), a UDM instance ID, an AUSF group ID, a UDM group ID, AUSF identification information, UDM identification information, a routing indicator, network routing information, an AUSF address, a UDM address, or some combination thereof.

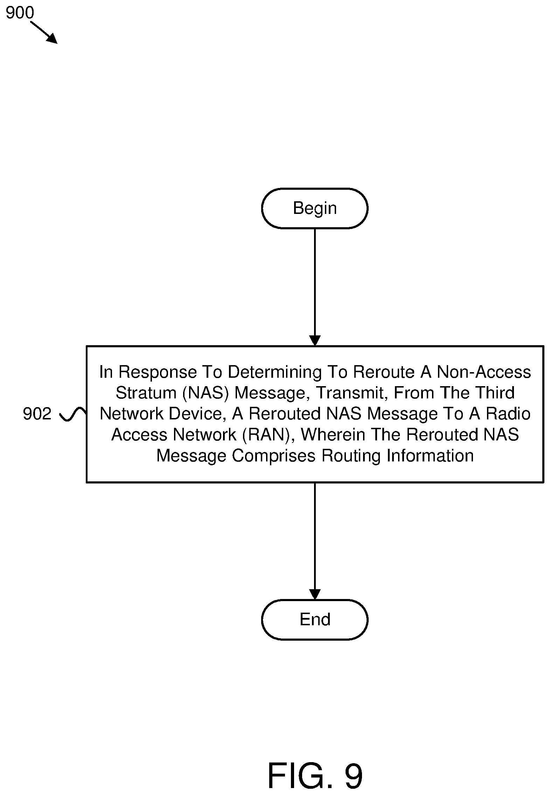

Figure 9 is a flow chart diagram illustrating a further embodiment of a method 900 for network security based on routing information. In some embodiments, the method 900 is performed by an apparatus, such as the network unit 104. In certain embodiments, the method 900 may be performed by a processor executing program code, for example, a microcontroller, a microprocessor, a CPU, a GPU, an auxiliary processing unit, a FPGA, or the like.

In various embodiments, the method 900 includes, in response to determining to reroute a non-access stratum (NAS) message, transmitting 902, from a third network device, a rerouted NAS message to a radio access network (RAN). The rerouted NAS message includes routing information.

In certain embodiments, the method 900 further comprises: transmitting, from the third network device, a security request message to an authentication server function (AUSF), wherein the security request message comprises information indicating a serving network name (SNN), whether the routing information is required, a subscription permanent identifier (SUPI), or some combination thereof; and receiving, from the AUSF, a security response message at the third network device, wherein the security response message comprises the routing information.

In some embodiments, the third network device comprises an initial access and mobility management function (AMF), an initial security anchor function (SEAF)), or a combination thereof. In various embodiments, the routing information comprises an AUSF instance identifier (ID), a unified data management (UDM) instance ID, an AUSF group ID, a UDM group ID, AUSF identification information, UDM identification information, a routing indicator, network routing information, an AUSF address, a UDM address, or some combination thereof.

In one embodiment, an apparatus comprises a first network device. The apparatus further comprises: a receiver that receives a security request message from an initial access and mobility management function (AMF), an initial security anchor function (SEAF)), or a combination thereof, wherein the security request message comprises information indicating a serving network name (SNN), whether routing information is required, a subscription permanent identifier (SUPI), or some combination thereof; a processor that determines routing information based on the security request message; and a transmitter that transmits a security response message to the initial AMF, the initial SEAF, or the combination thereof, wherein the security response message comprises the routing information.

In certain embodiments, the receiver receives a key request message from a target AMF, a target SEAF, or a combination thereof, and the key request message comprises information indicating the SNN, the target AMF, or a combination thereof.

In some embodiments, the processor derives a key based on the key request message, wherein deriving the key based on the key request message comprises deriving the key based on the target AMF.

In various embodiments, the processor verifies the SNN to verify whether the target AMF is authorized to use the SNN.

In one embodiment: the transmitter transmits a key response message to the target AMF, the target SEAF, or the combination thereof, wherein the key response message comprises the key; and the processor deletes locally stored user equipment (UE) context information in response to transmitting the key response message.

In certain embodiments, the first network device comprises an authentication server function (AUSF), a network function (NF), or a combination thereof.

In some embodiments, the routing information comprises an AUSF instance identifier (ID), a unified data management (UDM) instance ID, an AUSF group ID, a UDM group ID, AUSF identification information, UDM identification information, a routing indicator, network routing information, an AUSF address, a UDM address, or some combination thereof.

In one embodiment, a method of a first network device comprises: receiving, at the first network device, a security request message from an initial access and mobility management function (AMF), an initial security anchor function (SEAF)), or a combination thereof, wherein the security request message comprises information indicating a serving network name (SNN), whether routing information is required, a subscription permanent identifier (SUPI), or some combination thereof; determining, at the first network device, routing information based on the security request message; and transmitting, from the first network device, a security response message to the initial AMF, the initial SEAF, or the combination thereof, wherein the security response message comprises the routing information.

In certain embodiments, the method further comprises receiving a key request message from a target AMF, a target SEAF, or a combination thereof, wherein the key request message comprises information indicating the SNN, the target AMF, or a combination thereof.

In some embodiments, the method further comprises deriving a key based on the key request message, wherein deriving the key based on the key request message comprises deriving the key based on the target AMF.

In various embodiments, the method further comprises verifying the SNN to verify whether the target AMF is authorized to use the SNN.

In one embodiment, the method further comprises: transmitting a key response message to the target AMF, the target SEAF, or the combination thereof, wherein the key response message comprises the key; and deleting locally stored user equipment (UE) context information in response to transmitting the key response message.

In certain embodiments, the first network device comprises an authentication server function (AUSF), a network function (NF), or a combination thereof.

In some embodiments, the routing information comprises an AUSF instance identifier (ID), a unified data management (UDM) instance ID, an AUSF group ID, a UDM group ID, AUSF identification information, UDM identification information, a routing indicator, network routing information, an AUSF address, a UDM address, or some combination thereof.

In one embodiment, an apparatus comprises a second network device. The apparatus further comprises: a receiver that receives a rerouted non-access stratum (NAS) message from a radio access network (RAN), wherein the rerouted NAS message comprises routing information; a processor that determines a first network device for transmission of a key request message based on the rerouted NAS message: and a transmitter that transmits the key request message to the first network device.

In certain embodiments, the processor selects a third network device based on the routing information, wherein the third network device comprises a unified data management (UDM).

In some embodiments, the second network device comprises a target access and mobility management function (AMF), a target security anchor function (SEAF)), or a combination thereof.

In various embodiments, the processor initiates an NAS security mode command with a UE, wherein initiating the NAS security mode command comprises transmitting target AMF information, transmitting an NAS security context indicator (NSCI) flag set to 1, or a combination thereof.

In one embodiment, the target AMF information is used as an input for AMF key generation.

In certain embodiments, the processor stores the routing information.

In some embodiments, the first network device comprises an authentication server function (AUSF), a network function (NF), or a combination thereof.

In various embodiments, the routing information comprises an AUSF instance identifier (ID), a UDM instance ID, an AUSF group ID, a UDM group ID, AUSF identification information, UDM identification information, a routing indicator, network routing information, an AUSF address, a UDM address, or some combination thereof.

In one embodiment, a method of a second network device comprises: receiving, at the second network device, a rerouted non-access stratum (NAS) message from a radio access network (RAN), wherein the rerouted NAS message comprises routing information; determining a first network device for transmission of a key request message based on the rerouted NAS message; and transmitting the key request message to the first network device.

In certain embodiments, the method further comprises selecting a third network device based on the routing information, wherein the third network device comprises a unified data management (UDM).

In some embodiments, the second network device comprises a target access and mobility management function (AMF), a target security anchor function (SEAF)), or a combination thereof.

In various embodiments, the method further comprises initiating an NAS security mode command with a UE, wherein initiating the NAS security mode command comprises transmitting target AMF information, transmitting an NAS security context indicator (NSCI) flag set to 1, or a combination thereof.

In one embodiment, the target AMF information is used as an input for AMF key generation.

In certain embodiments, the method further comprises storing the routing information.

In some embodiments, the first network device comprises an authentication server function (AUSF), a network function (NF), or a combination thereof.

In various embodiments, the routing information comprises an AUSF instance identifier (ID), a UDM instance ID, an AUSF group ID, a UDM group ID, AUSF identification information, UDM identification information, a routing indicator, network routing information, an AUSF address, a UDM address, or some combination thereof.

In one embodiment, an apparatus comprises a third network device. The apparatus further comprises: a transmitter that, in response to determining to reroute a non-access stratum (NAS) message, transmits a rerouted NAS message to a radio access network (RAN), wherein the rerouted NAS message comprises routing information.

In certain embodiments, the apparatus further comprises a receiver, wherein: the transmitter transmits a security request message to an authentication server function (AUSF), wherein the security request message comprises information indicating a serving network name (SNN), whether the routing information is required, a subscription permanent identifier (SUPI), or some combination thereof; and a receiver that receives, from the AUSF, a security response message at the third network device, wherein the security response message comprises the routing information.

In some embodiments, the third network device comprises an initial access and mobility management function (AMF), an initial security anchor function (SEAF)), or a combination thereof.

In various embodiments, the routing information comprises an AUSF instance identifier (ID), a unified data management (UDM) instance ID, an AUSF group ID, a UDM group ID, AUSF identification information, UDM identification information, a routing indicator, network routing information, an AUSF address, a UDM address, or some combination thereof.

In one embodiment, a method of a third network device comprises: in response to determining to reroute a non-access stratum (NAS) message, transmitting, from the third network device, a rerouted NAS message to a radio access network (RAN), wherein the rerouted NAS message comprises routing information.

In certain embodiments, the method further comprises: transmitting, from the third network device, a security request message to an authentication server function (AUSF), wherein the security request message comprises information indicating a serving network name (SNN), whether the routing information is required, a subscription permanent identifier (SUPI), or some combination thereof; and receiving, from the AUSF, a security response message at the third network device, wherein the security response message comprises the routing information.

In some embodiments, the third network device comprises an initial access and mobility management function (AMF), an initial security anchor function (SEAF)), or a combination thereof.

In various embodiments, the routing information comprises an AUSF instance identifier (ID), a unified data management (UDM) instance ID, an AUSF group ID, a UDM group ID, AUSF identification information, UDM identification information, a routing indicator, network routing information, an AUSF address, a UDM address, or some combination thereof.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. An apparatus (104, 300) comprising:
at least one memory (304); and
at least one processor (302) coupled with the at least one memory (304) and configured to cause the apparatus (104, 300) to:
receive a security request message from at least one of an initial access and mobility management function, AMF, (406) or an initial security anchor function, SEAF, (406), wherein the security request message comprises information indicating whether routing information is required, a serving network name, SNN, and a subscription permanent identifier, SUPI;
determine the routing information based on the security request message; and
transmit a security response message to the at least one of the initial AMF (406) or the initial SEAF (406), wherein the security response message comprises the routing information that enables one or more of identifying, discovering, or selecting at least one of an authentication server function, AUSF, or a unified data management, UDM, that includes a corresponding user equipment, UE, context.

2. The apparatus (104, 300) of claim 1, wherein the apparatus (104, 300) is arranged to receive a key request message from at least one of a target AMF or a target SEAF, and the key request message comprises information indicating at least one of the SNN or the target AMF.

3. The apparatus (104, 300) of claim 2, wherein the at least one processor (302) is configured to cause the apparatus (104, 300) to derive a key based on the key request message, wherein deriving the key based on the key request message comprises deriving the key based on the target AMF.

4. The apparatus (104, 300) of claim 3, wherein the at least one processor (302) is configured to cause the apparatus (104, 300) to verify the SNN to verify whether the target AMF is authorized to use the SNN.

5. The apparatus (104, 300) of claim 3, wherein the at least one processor (302) is configured to cause the apparatus (104, 300) to:
transmit a key response message to at least one of the target AMF or the target SEAF, wherein the key response message comprises the key; and
delete locally stored user equipment, UE, context information in response to transmitting the key response message.

6. The apparatus (104, 300) of claim 1, wherein the apparatus (104, 300) comprises at least one of an AUSF (412) or a network function, NF.

7. The apparatus (104, 300) of claim 1, wherein the routing information comprises at least one of an AUSF instance identifier, ID, a unified data management, UDM, instance ID, an AUSF group ID, a UDM group ID, AUSF identification information, UDM identification information, a routing indicator, network routing information, an AUSF address, or a UDM address.

8. A method carried out by an apparatus (104, 300), the method comprising:
receiving a security request message from at least one of an AMF (406) or an SEAF (406), wherein the security request message comprises information indicating whether routing information is required, at least one of an SNN and a SUPI;
determining the routing information based on the security request message; and
transmitting a security response message to the at least one of the initial AMF (406) or the initial SEAF (406), wherein the security response message comprises the routing information that enables one or more of identifying, discovering, or selecting at least one of an authentication server function, AUSF, or a unified data management, UDM, that includes a corresponding user equipment, UE, context.

9. A method according to claim 8, comprising receiving a key request message from at least one of a target AMF or a target SEAF, the key request message comprising information indicating at least one of the SNN or the target AMF.

10. A method according to claim 9, comprising deriving a key based on the key request message, wherein deriving the key based on the key request message comprises deriving the key based on the target AMF.

11. A method according to claim 10, comprising verifying the SNN to verify whether the target AMF is authorized to use the SNN.

12. A method according to claim 10, comprising:
transmitting a key response message to at least one of the target AMF or the target SEAF, wherein the key response message comprises the key; and
deleting locally stored UE context information in response to transmitting the key response message.

13. A method according to claim 8, wherein the apparatus (104, 300) comprises at least one of an AUSF (412) or an NF.

14. A method according to claim 8, wherein the routing information comprises at least one of an AUSF instance identifier, ID, a UDM instance ID, an AUSF group ID, a UDM group ID, AUSF identification information, UDM identification information, a routing indicator, network routing information, an AUSF address, or a UDM address.

15. A method according to claim 8, wherein the method is carried out following indirect AMF reallocation with re-route via a non-access stratum, NAS.

## Patentansprüche

1. Gerät (104, 300), umfassend:
mindestens einen Speicher (304); und
mindestens einen Prozessor (302), der mit dem mindestens einen Speicher (304) gekoppelt ist und dazu konfiguriert ist, das Gerät (104, 300) zu veranlassen zum:
Empfangen einer Sicherheitsabfragenachricht von mindestens einer von einer anfänglichen Zugriffs- und Mobilitätsverwaltungsfunktion, AMF, (406) oder einer anfänglichen Sicherheitsanker-Funktion, SEAF, (406), wobei die Sicherheitsabfragenachricht Informationen, die angeben, ob Routinginformationen notwendig sind, einen Namen eines bedienenden Netzwerks, SNN, und eine permanente Teilnahmekennung, SUPI, umfassen;
Bestimmen der Routinginformationen basierend auf der Sicherheitsabfragenachricht; und
Senden einer Sicherheitsantwortnachricht an die mindestens eine der anfänglichen AMF (406) oder der anfänglichen SEAF (406), wobei die Sicherheitsantwortnachricht die Routinginformationen umfasst, die eines oder mehreres ermöglichen von Identifizieren, Entdecken oder Auswählen mindestens einer von einer Authentifizierungsserver-Funktion, AUSF, oder einer einheitlichen Datenverwaltung, UDM, die einen entsprechenden Kontext eines Endgeräts, UE, umfasst.

2. Gerät (104, 300) nach Anspruch 1, wobei das Gerät (104, 300) dazu eingerichtet ist, eine Schlüsselanforderungsnachricht von mindestens einer von einer Ziel-AMF oder einer Ziel-SEAF zu empfangen, und die Schlüsselanforderungsnachricht Informationen umfasst, die mindestens eines von dem SNN oder der Ziel-AMF umfassen.

3. Gerät (104, 300) nach Anspruch 2, wobei der mindestens eine Prozessor (302) dazu konfiguriert ist, das Gerät (104, 300) dazu zu veranlassen, einen Schlüssel basierend auf der Schlüsselanforderungsnachricht abzuleiten, wobei das Ableiten des Schlüssels basierend auf der Schlüsselanforderungsnachricht das Ableiten des Schlüssels basierend auf der Ziel-AMF umfasst.

4. Gerät (104, 300) nach Anspruch 3, wobei der mindestens eine Prozessor (302) dazu konfiguriert ist, das Gerät (104, 300) dazu zu veranlassen, den SNN zu überprüfen, um zu überprüfen, ob die Ziel-AMF dazu berechtigt ist, den SNN zu verwenden.

5. Gerät (104, 300) nach Anspruch 3, wobei der mindestens eine Prozessor (302) dazu konfiguriert ist, das Gerät (104, 300) zu veranlassen zum:
Senden einer Schlüsselantwortnachricht an mindestens eine von der Ziel-AMF oder der Ziel-SEAF, wobei die Schlüsselantwortnachricht den Schlüssel umfasst; und
Löschen von lokal gespeicherten Kontextinformationen des Endgeräts, UE, als Reaktion auf das Senden der Schlüsselantwortnachricht.

6. Gerät (104, 300) nach Anspruch 1, wobei das Gerät (104, 300) mindestens eine von einer AUSF (412) oder einer Netzwerkfunktion, NF, umfasst.

7. Gerät (104, 300) nach Anspruch 1, wobei die Routinginformationen mindestens eines von einer AUSF-Instanzkennung, ID, einer Instanz-ID einer einheitlichen Datenverwaltung, UDM, einer AUSF-Gruppen-ID, einer UDM-Gruppen-ID, von AUSF-Identifikationsinformationen, von UDM-Identifikationsinformationen, einem Routingindikator, von Netzwerkrouting-Informationen, einer AUSF-Adresse oder einer UDM-Adresse umfassen.

8. Verfahren, das von einem Gerät (104, 300) ausgeführt wird, wobei das Verfahren umfasst:
Empfangen einer Sicherheitsabfragenachricht von mindestens einer von einer AMF (406) oder einer SEAF (406), wobei die Sicherheitsabfragenachricht Informationen, die angeben, ob Routinginformationen notwendig sind, und mindestens eines von einem SNN und einer SUPI umfassen;
Bestimmen der Routinginformationen basierend auf der Sicherheitsabfragenachricht; und
Senden einer Sicherheitsantwortnachricht an die mindestens eine der anfänglichen AMF (406) oder der anfänglichen SEAF (406), wobei die Sicherheitsantwortnachricht die Routinginformationen umfasst, die eines oder mehreres ermöglichen von Identifizieren, Entdecken oder Auswählen mindestens einer von einer Authentifizierungsserver-Funktion, AUSF, oder einer einheitlichen Datenverwaltung, UDM, die einen entsprechenden Kontext eines Endgeräts, UE, umfasst.

9. Verfahren nach Anspruch 8, umfassend das Empfangen einer Schlüsselanforderungsnachricht von mindestens einer von einer Ziel-AMF oder einer Ziel-SEAF, wobei die Schlüsselanforderungsnachricht Informationen umfasst, die mindestens eines von dem SNN oder der Ziel-AMF angeben.

10. Verfahren nach Anspruch 9, umfassend das Ableiten eines Schlüssels basierend auf der Schlüsselanforderungsnachricht, wobei das Ableiten des Schlüssels basierend auf der Schlüsselanforderungsnachricht das Ableiten des Schlüssels basierend auf der Ziel-AMF umfasst.

11. Verfahren nach Anspruch 10, umfassend das Überprüfen des SNN, um zu überprüfen, ob die Ziel-AMF berechtigt ist, den SNN zu verwenden.

12. Verfahren nach Anspruch 10, umfassend:
Senden einer Schlüsselantwortnachricht an mindestens eine von der Ziel-AMF oder der Ziel-SEAF, wobei die Schlüsselantwortnachricht den Schlüssel umfasst; und
Löschen von lokal gespeicherten UE-Kontextinformationen als Reaktion auf das Senden der Schlüsselantwortnachricht.

13. Verfahren nach Anspruch 8, wobei das Gerät (104, 300) mindestens eine von einer AUSF (412) oder einer NF umfasst.

14. Verfahren nach Anspruch 8, wobei die Routinginformationen mindestens eines von einer AUSF-Instanzkennung, ID, einer UDM-Instanz-ID, einer AUSF-Gruppen-ID, einer UDM-Gruppen-ID, von AUSF-Identifikationsinformationen, von UDM-Identifikationsinformationen, einem Routingindikator, von Netzwerkrouting-Informationen, einer AUSF-Adresse oder einer UDM-Adresse umfassen.

15. Verfahren nach Anspruch 8, wobei das Verfahren in Folge einer indirekten AMF-Neuzuteilung mit einer Umleitung über ein Nicht-Zugriffs-Stratum, NAS, ausgeführt wird.

## Revendications

1. Appareil (104, 300), comprenant :
au moins une mémoire (304) ; et
au moins un processeur (302) couplé à ladite au moins une mémoire (304) et configuré amener l'appareil (104, 300) à :
recevoir un message de demande de sécurité provenant d'au moins l'une d'une fonction initiale d'accès et de gestion de mobilité, AMF, (406) ou d'une fonction initiale d'ancrage de sécurité, SEAF, (406), dans lequel le message de demande de sécurité comprend des informations indiquant si des informations de routage sont nécessaires, un nom de réseau de desserte, SNN, et un identifiant permanent d'abonnement, SUPI ;
déterminer les informations de routage sur la base du message de demande de sécurité ; et
transmettre un message de réponse de sécurité à ladite au moins une de l'AMF initiale (406) ou de la SEAF initiale (406), dans lequel le message de réponse de sécurité comprend les informations de routage qui permettent un ou plusieurs éléments parmi l'identification, la découverte ou la sélection d'au moins l'une d'une fonction de serveur d'authentification, AUSF, ou d'une gestion de données unifiée, UDM, qui comprend un contexte correspondant d'un équipement utilisateur, UE.

2. Appareil (104, 300) selon la revendication 1, dans lequel l'appareil (104, 300) est agencé pour recevoir un message de demande de clé d'au moins l'une d'une AMF cible ou d'une SEAF cible, et le message de demande de clé comprend des informations indiquant au moins un élément du SNN ou de l'AMF cible.

3. Appareil (104, 300) selon la revendication 2, dans lequel ledit au moins un processeur (302) est configuré pour amener l'appareil (104, 300) à dériver une clé sur la base du message de demande de clé, la dérivation de la clé sur la base du message de demande de clé comprenant la dérivation de la clé sur la base de l'AMF cible.

4. Appareil (104, 300) selon la revendication 3, dans lequel ledit au moins un processeur (302) est configuré pour amener l'appareil (104, 300) à vérifier le SNN pour vérifier si l'AMF cible est autorisée à utiliser le SNN.

5. Appareil (104, 300) selon la revendication 3, dans lequel ledit au moins un processeur (302) est configuré pour amener l'appareil (104, 300) à :
transmettre un message de réponse de clé à au moins l'une de l'AMF cible ou de la SEAF cible, le message de réponse de clé comprenant la clé ; et
supprimer des informations de contexte d'équipement utilisateur, UE, stockées localement en réponse à la transmission du message de réponse de clé.

6. Appareil (104, 300) selon la revendication 1, dans lequel l'appareil (104, 300) comprend au moins l'une d'une AUSF (412) ou d'une fonction de réseau, NF.

7. Appareil (104, 300) selon la revendication 1, dans lequel les informations de routage comprennent au moins un élément parmi un identifiant d'instance d'AUSF, ID, un ID d'instance de gestion de données unifiée, UDM, un ID de groupe d'AUSF, un ID de groupe d'UDM, des informations d'identification d'AUSF, des informations d'identification d'UDM, un indicateur de routage, des informations de routage de réseau, une adresse d'AUSF ou une adresse UDM.

8. Procédé effectué par un appareil (104, 300), le procédé comprenant les étapes consistant à :
recevoir un message de demande de sécurité provenant d'au moins l'une d'une AMF (406) ou d'une SEAF (406), dans lequel le message de demande de sécurité comprend des informations indiquant si des informations de routage sont nécessaires, et au moins l'un d'un SNN et d'un SUPI ;
déterminer les informations de routage sur la base du message de demande de sécurité ; et
transmettre un message de réponse de sécurité à ladite au moins une parmi l'AMF initiale (406) ou la SEAF initiale (406), dans lequel le message de réponse de sécurité comprend les informations de routage qui permettent un ou plusieurs éléments parmi l'identification, la découverte ou la sélection d'au moins l'une d'une fonction de serveur d'authentification, AUSF, ou d'une gestion de données unifiée, UDM, qui comprend un contexte correspondant d'un équipement utilisateur, UE.

9. Procédé selon la revendication 8, comprenant la réception d'un message de demande de clé provenant d'au moins l'une d'une AMF cible ou d'une SEAF cible, le message de demande de clé comprenant des informations indiquant au moins un élément parmi le SNN ou l'AMF cible.

10. Procédé selon la revendication 9, comprenant la dérivation d'une clé sur la base du message de demande de clé, la dérivation de la clé sur la base du message de demande de clé comprenant la dérivation de la clé sur la base de l'AMF cible.

11. Procédé selon la revendication 10, comprenant la vérification du SNN pour vérifier si l'AMF cible est autorisée à utiliser le SNN.

12. Procédé selon la revendication 10, comprenant :
la transmission d'un message de réponse de clé à au moins l'une de l'AMF cible ou de la SEAF cible, le message de réponse de clé comprenant la clé ; et
la suppression d'informations de contexte d'UE stockées localement en réponse à la transmission du message de réponse de clé.

13. Procédé selon la revendication 8, dans lequel l'appareil (104, 300) comprend au moins l'une d'une AUSF (412) ou d'une NF.

14. Procédé selon la revendication 8, dans lequel les informations de routage comprennent au moins un élément parmi un identifiant d'instance d'AUSF, ID, un **ID** d'instance d'UDM, un ID de groupe d'AUSF, un ID de groupe d'UDM, des informations d'identification d'AUSF, des informations d'identification d'UDM, un indicateur de routage, des informations de routage de réseau, une adresse d'AUSF ou une adresse d'UDM.

15. Procédé selon la revendication 8, dans lequel le procédé est effectué suite à une réallocation d'AMF indirecte avec un nouveau routage par l'intermédiaire d'une strate de non-accès, NAS.
